# EUROPEAN PATENT APPLICATION

(11) **EP 4 485 085 A1**
(43) Date of publication of application: **01.01.2025**
(21) Application number: 24181107.4
(22) Date of filing: 10.06.2024
(51) Int. Cl.: G03G 15/20

(54) **IMAGE FORMING APPARATUS**

(30) Priority: 15.06.2023 JP 2023098622
(71) Applicant: Ricoh Company, Ltd., Tokyo 143-8555 (JP)
(72) Inventor: HASE, Takamasa, Ohta-ku, Tokyo, 143-8555 (JP); YOSHIURA, Arinobu, Tokyo, 143-8555 (JP); YAMASHITA, Kentaro, Tokyo, 143-8555 (JP); INOUE, Daisuke, Tokyo, 143-8555 (JP); NAKAMOTO, Shogo, Tokyo, 143-8555 (JP); IWAMA, Mototaka, Tokyo, 143-8555 (JP)
(74) Representative: SSM Sandmair

(57) **Abstract**

An image forming apparatus (100) includes an automatic document feeder (102), a fixing device (18), and a controller (105). The automatic document feeder (102) conveys a document by one of multiple document conveyance speeds. The controller (105) is configured to drive the automatic document feeder (102) during warming up the fixing device (18) and set at leaset one of a warm-up time of the fixing device (18) or a printing speed based on the one of multiple document conveyance speeds of the automatic document feeder (102).

## Description

### BACKGROUND

### Technical Field

Embodiments of the present disclosure relate to an image forming apparatus, and particularly, to an image forming apparatus such as a multi-function peripheral (MFP) including an automatic document feeder having at least two operation modes with different power consumption.

### Related Art

An image forming apparatus such as a multifunction peripheral (MFP) for office use has not only functions of copying and printing but also functions of automatic document reading by an automatic document feeder (ADF) and post-processing by a finisher. On the other hand, the power supplied to the image forming apparatus such as an MFP is typically 100 V in Japan, and the upper limit of the power at one outlet is 1500 W in many cases in Japan.

Typically, a predetermined power (for example, 1500 W in Japan) or less is supplied from the one outlet to the body of the image forming apparatus and peripheral devices. However, the ADF and the finisher may operate simultaneously with printing, and the allocated power may be insufficient for the power required by a fixing device.

Japanese Unexamined Patent Application Publication No. 2005-24899 discloses switching an operation mode of the ADF to a low-speed operation mode to reduce power consumption in the ADF and increase the power supplied to the fixing device in a warm-up operation when the temperature of the fixing device is low. However, the above-described technology has a disadvantage that the waiting time until a job is completed is long because an image forming operation starts after a reading operation is completed when the reading speed is slower than the printing speed.

### SUMMARY

An object of the present disclosure is providing an image forming apparatus that can start printing without switching the ADF reading speed from a typical speed to a low speed in the warm-up operation. In order to achieve this object, there is provided an image forming apparatus according to claim 1. Advantageous embodiments are defined by the dependent claims.

Advantageously, the image forming apparatus includes an automatic document feeder, a fixing device, and a controller. The automatic document feeder conveys a document by one of multiple document conveyance speeds. The controller is configured to drive the automatic document feeder during warming up the fixing device and set at least one of a warm-up time of the fixing device or a printing speed based on the one of multiple document conveyance speeds of the automatic document feeder.

According to one aspect of the present disclosure, the image forming apparatus can start printing without switching the ADF reading speed from a typical speed mode to a low speed mode in the warm-up operation.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1A is a schematic diagram illustrating a configuration of an image forming apparatus according to an embodiment of the present disclosure;
FIG. 1B is a block diagram of an image forming apparatus;
FIG. 2 is a schematic cross-sectional view of a fixing device used in an image forming apparatus;
FIG. 3 is a bar chart to illustrate power distributions of an image forming apparatus including (a) a power distribution during an ADF low speed mode and a warm-up operation, (b) a power distribution during an ADF high speed mode and the warm-up operation, (c) a power distribution during the ADF low speed mode and a printing operation, and (d) a power distribution during the ADF high speed mode and the printing operation;
FIG. 4A is a flowchart of control from the start of warming up an image forming apparatus to the start of printing to change a warm-up time based on an ADF reading speed;
FIG. 4B is a flowchart of control from the start of warming up an image forming apparatus to change the printing speed until the image forming apparatus prints the first to fifth sheets based on an ADF reading speed;
FIG. 4C is a flowchart of control from the start of warming up an image forming apparatus to the start of printing to change a warm-up time based on an ADF reading speed and a temperature of a fixing device before the image forming apparatus starts the warm-up; and
FIG. 4D is a flowchart of control from the start of warming up an image forming apparatus to the start of printing to change a warm-up time based on a recording medium ejection destination of a print job.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

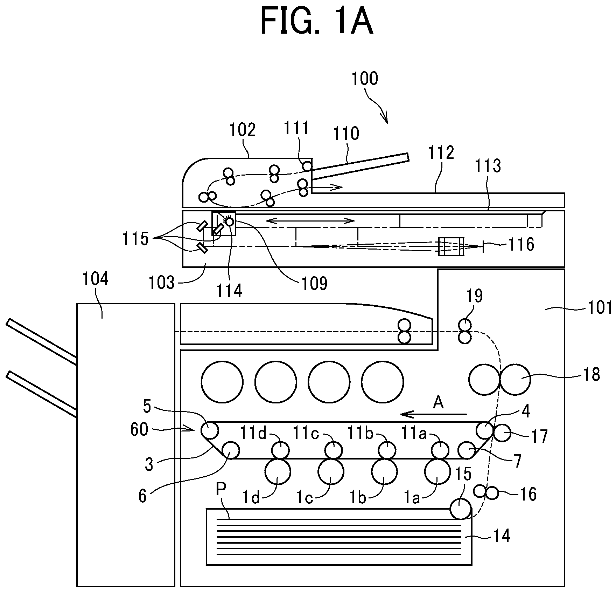

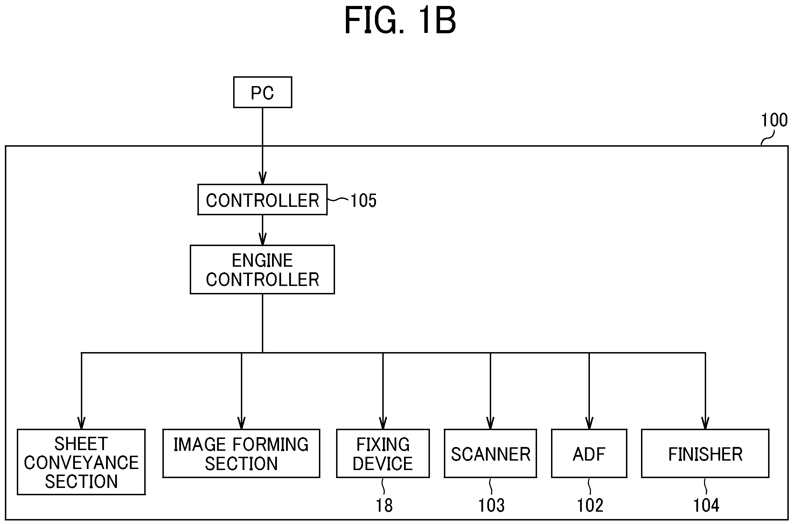

As the image forming apparatus according to an embodiment of the present disclosure, an electrophotographic image forming apparatus 100 is described below. FIG. 1A is a schematic diagram illustrating a configuration of the image forming apparatus 100 according to the present embodiment. FIG. 1B is a block diagram of the image forming apparatus 100 according to the embodiment of the present disclosure. The image forming apparatus 100 includes a main body 101, an automatic document feeder (ADF) 102, a scanner 103 as an image reading device, and a post-processing apparatus such as a finisher 104. The main body 101 and the scanner 103 may be integrally formed or may be separately formed.

The image forming apparatus 100 includes an operation panel. The operation panel allows a user to change paper settings, copy image quality, and scanner settings. As illustrated in FIG. 1B, the image forming apparatus 100 can receive and print a printing job transmitted from an external apparatus such as a personal computer.

As illustrated in FIG 1B, the image forming apparatus 100 includes a controller 105, an engine controller, a sheet conveyance section, an image forming section, a fixing device 18, a scanner 103, the ADF 102, and a finisher 104. The controller sends signals to various parts to execute printing in accordance with a print mode set by a printer driver. As illustrated in FIG. 1A, the ADF 102 includes a document feed tray 110 to set a document, a pickup roller 111 that picks up the document from the document feed tray 110, and a sheet ejection tray 112 to which the document is ejected.

The scanner 103 includes a carriage 109 movable in a horizontal direction indicated by a double-headed arrow as illustrated in FIG. 1A, a light source 114 such as a light-emitting diode (LED) that is in the carriage 109 and irradiates the document with light through a platen 113, multiple reflection mirrors 115, a photoelectric conversion element (a charge-coupled device (CCD) sensor) 116 that receives light from the document and converts the light into an electrical signal, and an A / D converter that converts the electrical signal into digital data. The finisher 104 has a stapler function, a punching function, and a sheet folding function as post-processing for sheets on which an image has been formed. The sheets may be referred to as recording sheets.

The stapler can bind sheets ejected from the main body 101 in a predetermined number of sheets in accordance with instructions included in print job data. A punch can punch a hole at a predetermined position on a sheet or a predetermined number of sheets ejected from the image forming apparatus 100 in accordance with instructions included in the print job data.

The image forming section in the main body 101 forms a toner image on a sheet P and includes four (first to fourth) photoconductors 1a to 1d as image bearers. The image forming section in the main body 101 includes an intermediate transfer device 60 that is a belt device including an intermediate transfer belt 3 as a belt above the four photoconductors 1a to 1d.

Different color toner images are formed on the four photoconductors 1a to 1d. Black toner images, cyan toner images, magenta toner images, and yellow toner images are formed on the four photoconductors 1a, 1b, 1c, and 1d according to the present embodiment, respectively. The photoconductors 1a, 1b, 1c, and 1d in FIG. 1A are drum-shaped photoconductors but may be photoconductor belts each having an endless belt shape, being wound around multiple rollers, and being driven to rotate by a driving roller.

The image forming apparatus 100 further includes an intermediate transfer belt 3 that functions as an intermediate transfer body. The intermediate transfer belt 3 is disposed facing the four photoconductors 1a, 1b, 1c, and 1d (to be more specific, the first photoconductor 1a, the second photoconductor 1b, the third photoconductor 1c, and the fourth photoconductor 1d). In FIG. 1A, the four photoconductors 1a, 1b, 1c, and 1d are in contact with the surface of the intermediate transfer belt 3. The intermediate transfer belt 3 illustrated in FIG. 1A is wound around support rollers, which are a secondary transfer facing roller 4, a tension roller 5, a backup roller 6, and an entrance roller 7. The secondary transfer facing roller 4 that functions as one of the support rollers is a drive roller that is driven by a driver. As the secondary transfer facing roller 4 rotates, the intermediate transfer belt 3 is rotated in a direction indicated by arrow A in FIG. 1A.

The intermediate transfer belt 3 may have either a multi-layer structure or a single-layer structure. The multiple layers preferably include a base layer having an outer circumferential surface coated by a smooth coating layer made of, e.g., fluorine-based resin. The base layer may be made of, for example, a stretch-resistant fluororesin, polyvinylidene difluoride (PVDF) sheet, or polyimide resin. The single layer may be preferably made of, for example, PVDF, polycarbonate (PC), or polyimide.

Regardless of the color of toner, the configuration and operation to form toner images on the four photoconductors 1a, 1b, 1c, and 1d are similar. Similarly, the configuration and operation to transfer the toner images onto the intermediate transfer belt 3 are similar regardless of the color of toner. Accordingly, a description is given of how a yellow toner image is formed on the photoconductor 1d for forming the yellow toner image out of the four photoconductors 1a, 1b, 1c, and 1d and how the yellow toner image is transferred from the photoconductor 1d, which is disposed most upstream in a belt surface moving direction of the intermediate transfer belt 3, to the intermediate transfer belt 3. Descriptions of the configuration and operation regarding the photoconductors 1a, 1b, and 1c forming other toner color images (cyan toner image, magenta toner image, and black toner image) are omitted to avoid redundancy.

The photoconductor 1d for forming the yellow toner image rotates clockwise in FIG. 1A. The photoconductor 1d for forming the yellow toner image is referred to as the photoconductor 1d. As the photoconductor 1d is rotated, the surface of the photoconductor 1d is irradiated with light from a static eliminator. Consequently, the surface potential of the photoconductor 1d is initialized. The photoconductor 1d is further rotated and reaches a position where the photoconductor 1d faces a charging device, and the charging device uniformly charges the initialized outer circumferential surface of the photoconductor 1d to a given polarity (in the present embodiment, to a negative polarity).

An exposure device disposed below the photoconductors 1a, 1b, 1c, and 1d emits laser light beams onto the charged outer circumferential surfaces of the respective photoconductors 1a, 1b, 1c, and 1d according to black, cyan, magenta, and yellow image data contained in image data sent from the external device, respectively, thus forming electrostatic latent images on the respective outer circumferential surfaces. In the image forming apparatus 100 of FIG. 1A, the exposure device as a laser writer emits the laser beams. Alternatively, the exposure device may include a light-emitting diode (LED) array and an imaging device.

The electrostatic latent image formed on the photoconductor 1d is visualized as a visible yellow toner image by a developing device for yellow, and developing devices for other colors each having the same configuration as the developing device for yellow are disposed around the photoconductors for other colors, respectively. Further, primary transfer rollers 11a, 11b, 11c, and 11d are disposed inside a loop formed by the intermediate transfer belt 3. The primary transfer rollers 11a, 11b, 11c, and 11d are disposed opposing (facing) the photoconductors 1a, 1b, 1c, and 1d, respectively, via the intermediate transfer belt 3.

The primary transfer roller 11d is brought into contact with the back surface of the intermediate transfer belt 3, forming a transfer nip between the photoconductor 1d and the intermediate transfer belt 3 properly. A primary transfer bias is applied to the primary transfer roller 11d. The primary transfer bias has a positive polarity in the present embodiment, that is opposite a toner charging polarity of toner contained in the yellow toner image formed on the surface of the photoconductor 1d.

Thus, a transfer electrical field is generated between the photoconductor 1d and the intermediate transfer belt 3. The yellow toner image on the photoconductor 1d is electrically (electrostatically) transferred onto the intermediate transfer belt 3 that is rotated in synchronization with the photoconductor 1d. After the yellow toner image is transferred onto the intermediate transfer belt 3, a cleaning device for yellow removes the residual toner remaining on the surface of the photoconductor 1d to clean the surface of the photoconductor 1d.

Similarly, a black toner image, a cyan toner image, and a magenta toner image are formed on the other three photoconductors 1a, 1b, and 1c, respectively, and the toner images of respective colors are sequentially superimposed and electrically (electrostatically) transferred one after another on the yellow toner image on the intermediate transfer belt 3.

The image forming apparatus 100 has two types of drive modes, which are a full-color mode in which four color toners are used and a monochrome mode in which black color toner alone is used. In the full-color mode, the intermediate transfer belt 3 and each of the four photoconductors 1a, 1b, 1c, and 1d come into contact with each other, and the four color toner images are transferred onto the intermediate transfer belt 3.

By contrast, in the monochrome mode, the photoconductor 1a alone contacts the intermediate transfer belt 3, so that black toner alone is transferred to the intermediate transfer belt 3. At this time, the three photoconductors 1b, 1c, and 1d for cyan toner image, magenta toner image, and yellow toner image are not in contact with the intermediate transfer belt 3, and a contact-separation mechanism separates the three primary transfer rollers 11b, 11c, and 11d from the three photoconductors 1b, 1c, and 1d. In order to reliably separate the intermediate transfer belt 3 from the three photoconductors 1b, 1c, and 1d for cyan toner image, magenta toner image, and yellow toner image, the backup roller 6 is moved to change the profile of the intermediate transfer belt 3.

As illustrated in FIG. 1A, the image forming apparatus 100 further includes a sheet feeding device 14 in a lower portion of the main body 101 to convey the sheet. The sheet feeding device 14 includes a sheet feed roller 15. As the sheet feed roller 15 rotates, the sheet P as a recording medium is fed out upward in FIG. 1A. The sheet P fed out from the sheet feeding device 14 contacts a pair of registration rollers 16 for a sheet conveyance and stops temporarily.

A portion of the intermediate transfer belt 3 is wound around the secondary transfer facing roller 4. The portion of the intermediate transfer belt 3 contacts a secondary transfer roller 17 that functions as a secondary transferor disposed facing the secondary transfer facing roller 4. Thus, a secondary transfer nip is formed between the secondary transfer roller 17 and the secondary transfer facing roller 4 via the intermediate transfer belt 3.

The sheet P that has contacted the pair of registration rollers 16 is conveyed to the secondary transfer nip at a given timing. At this time, a given transfer voltage is applied to the secondary transfer roller 17, so that a composite toner image formed by overlaying the single color toner images on the surface of the intermediate transfer belt 3 is secondarily transferred onto the sheet P.

The sheet P on which the composite toner image is formed by secondary transfer is further conveyed upward in the image forming apparatus 100 to pass the fixing device 18. When passing the fixing device 18, the composite toner image on the sheet P is fixed to the sheet P by application of heat and pressure in the fixing device 18. The sheet P that has passed through the fixing device 18 is ejected to the outside of the image forming apparatus 100 by a pair of sheet ejection rollers 19 disposed in a sheet ejection device, so that the sheet P is stacked on a sheet ejection tray 112 that is a top portion of the main body 101. After the toner image is transferred onto the sheet P, some toner remains as transfer residual toner on the surface of the intermediate transfer belt 3. The transfer residual toner is removed from the intermediate transfer belt 3 by a belt cleaning device.

A description is given below of the fixing device 18 according to an embodiment of the present disclosure.

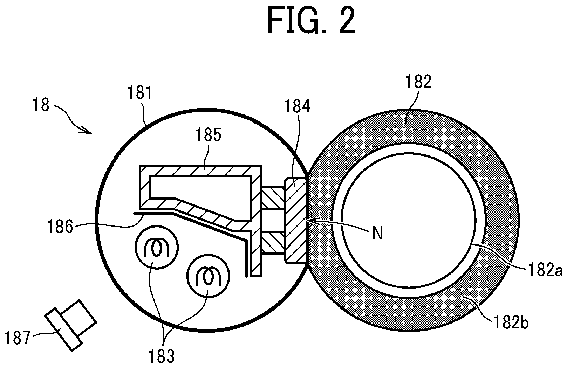

FIG. 2 is a schematic cross-sectional view of the fixing device 18 according to the present embodiment.

The fixing device 18 according to the present embodiment includes a fixing belt 181, a pressure roller 182, two heaters 183, and a nip forming plate 184. The fixing belt 181 is an endless belt. Each of the two heaters 183 functions as a heater to heat the fixing belt 181. The nip forming plate 184 functions as a nip forming member disposed facing the pressure roller 182 via the fixing belt 181.

The nip forming plate 184 is disposed in contact with an inner circumferential surface of the fixing belt 181, to sandwich (hold) the fixing belt 181 with the pressure roller 182. By so doing, a fixing nip N is formed between the pressure roller 182 and the fixing belt 181 at a portion contacting the nip forming face of the nip forming plate 184.

The fixing belt 181 is an endless belt or film made of metal, such as nickel or steel use stainless (SUS), or resin such as polyimide. The fixing belt 181 includes a base layer and a release layer. The release layer, as an outer surface layer of the fixing belt 181, is made of perfluoroalkoxy alkane (PFA) or polytetrafluoroethylene (PTFE) to facilitate separation of toner of the toner image on the sheet from the fixing belt 181.

An elastic layer made of, e.g., silicone rubber may be interposed between the base layer and the release layer of the fixing belt 181. If the fixing belt 181 does not include the elastic layer, the fixing belt 181 has a decreased thermal capacity that enhances the fixing property. However, slight surface asperities in the fixing belt 181 may be transferred onto the toner image on the sheet S, resulting in variation in gloss of the solid toner image that may appear as an orange peel image on the sheet P.

In order to address this situation, the fixing belt 181 preferably includes the elastic layer having a thickness not smaller than 100 µm, for example. As the elastic layer deforms, the elastic layer absorbs the slight surface asperities in the fixing belt 181, thereby preventing the formation of the faulty orange peel image.

The heaters 183 are disposed opposite the inner circumferential surface of the fixing belt 181, and radiant heat radiated by the heaters 183 heats the fixing belt 181. The heaters 183 according to the present embodiment are halogen heaters. However, the type and number of heaters 183 are not fixed. In other words, the type and number of heaters 183 depend on the fixing device 18 according to the present embodiment. For example, instead of the halogen heaters 183, a heater such as an induction heater (IH), a resistive heat generator, or a carbon heater may be used.

The pressure roller 182 is an elastic roller in which the periphery of a cored bar 182a is covered by an elastic rubber layer 182b The surface layer of the pressure roller 182 has a hardness lower than the hardness of the nip forming surface of the nip forming plate 184. The elastic rubber layer 182b of the pressure roller 182 may be solid rubber but is preferably sponge rubber.

The sponge rubber is preferable to the solid rubber because the sponge rubber has enhanced thermal insulation that draws less heat from the fixing belt 181 to the pressure roller 182. Further, the pressure roller 182 includes a surface release layer made of PFA or PTFE to facilitate the separation of the sheet P from the pressure roller 182.

The pressure roller 182 includes a shaft that is supported by a housing of the fixing device 18. As a driving force is generated by a driver such as a motor mounted on the main body 101 of the image forming apparatus 100, the driving force is transmitted to the pressure roller 182 through a gear train, and the pressure roller 182 rotates in a rotational direction. In the fixing nip N, the rotation driving force is transmitted from the pressure roller 182 to the fixing belt 181. Rotations of the pressure roller 182 rotate the fixing belt 181. While the fixing belt 181 rotates, holders (in other words, flanges) guide both ends of the fixing belt 181 in a portion other than the fixing nip N.

While the fixing belt 181 rotates, the inner circumferential surface of the fixing belt 181 slides on a nip forming surface of the nip forming plate 184. A slidability enhancing member such as a slide aid sheet may be interposed between the nip forming surface of the nip forming plate 184 and the inner circumferential surface of the fixing belt 181 to enhance the sliding performance of the fixing belt 181.

The nip forming plate 184 is fixed and supported on a stay 185. The stay 185 also has the function of preventing the nip forming plate 184 from being bent by pressure of the pressure roller 182 to form the fixing nip N having a uniform width in a width direction of the fixing belt 181 that is an axial direction of the pressure roller 182.

The stay 185 that receives the pressure applied by the pressure roller 182 enables obtaining a pressure in the fixing nip N to fuse and fix the toner of the toner image onto the sheet P. Holders hold and fix both ends of the stay 185 to position the stay 185.

Bending an iron plate or a stainless steel plate forms the stay 185. Since an iron plate or steel use stainless (SUS) plate having a thickness of 2 to 4 mm is used for the stay 185, the stay 185 has a large thermal capacity. To prevent the large thermal capacity of the stay 185 from consuming unnecessary energy, a reflector 186 is provided between the heaters 183 and the stay 185 in the present embodiment. The reflector 186 prevents the stay 185 from being heated by radiant heat from the heaters 183 and consuming unnecessary energy. Instead of the reflector 186, the surface of the stay 185 may be subjected to heat insulation treatment or mirror finish treatment.

The nip forming plate 184 according to the present embodiment has a substantially flat nip forming face. Since the nip forming face of the nip forming plate 184 has higher hardness than the hardness of the elastic rubber layer 182b of the pressure roller 182, the elastic rubber layer 182b of the pressure roller 182 elastically deforms along the nip forming face of the nip forming plate 184.

As a result, the fixing nip N in the present embodiment has a substantially flat face along the nip forming face (that is a flat face) of the nip forming plate 184. The nip forming face may not be completely flat. As long as the curvature is sufficiently smaller than the curvature of a known fixing nip formed by two rollers, the nip forming face may have a slightly curved shape such as a convex shape or a concave shape.

The fixing device 18 according to the present embodiment that is configured as described above has a structure having a low thermal capacity around the fixing belt 181 and efficiently heats the fixing belt 181 in a short time. In the present embodiment, the image forming apparatus 100 performs a warm-up operation to raise the temperature of the fixing belt 181 to the specified fixing temperature and subsequently starts an image forming operation. Since the structure around the fixing belt 181 in the fixing device 18 according to the present embodiment has a low thermal capacity, the heaters can heat the fixing belt 181 to the specified fixing temperature in a short time, which can reduce the period of the warm-up operation that is referred to as a warm-up time.

The amount of power supplied to the heaters 183 is determined according to a difference between a target temperature and a surface temperature of the fixing belt 181 that is detected by a thermopile 187. However, at the start of printing and the start of warming up the fixing device, a predetermined amount of power may be input to the heaters 183. The rated power of the heaters is 1200 W, and the power supply voltage is 100 V. When the power is always supplied to the heaters, a current 12 A flows, and the power consumption becomes 1200 W.

The following describes a power distribution control in the present embodiment.

The image forming apparatus 100 consumes power in the controller, the engine controller, the sheet conveyance section, the image forming section, the fixing device 18, the scanner 103, the ADF 102, and the finisher 104 that are illustrated in FIG. 1B. The controller distributes power to each of these parts. The fixing device 18 consumes the largest power. The maximum power consumption of the image forming apparatus 100 varies depending on the operation speed of the ADF 102 and the use of the finisher. The power distribution to ADF 102 is described below. Table 1 lists the power distributed to each set of ADF reading resolutions, ADF reading speeds, and function modes. A first operation mode in the upper row of Table 1 includes an ADF reading resolution of 600 dpi and an ADF reading speed of 300 mm/s and is used for both scan mode and copy mode. The controller distributes 100 W to the ADF 102 operating the first operation mode in the upper row.

**[Table 1]**

| ADF reading resolution [dpi] | ADF reading speed [mm/s] | Function mode | Distributed power [W] |
|---|---|---|---|
| 600 | 300 | Scan and copy | 100 |
| 300 | 600 | Scan | 150 |

A second operation mode in the lower row of Table 1 includes an ADF reading resolution of 300 dpi and an ADF reading speed of 600 mm/s and is not used for the copy mode. The second operation mode in the lower row is used only when a document is scanned to store or transmit document image data. Since the second operation mode in the lower row includes a high speed condition, the controller distributes 150 W to the ADF 102 operating the second operation mode in the lower row.

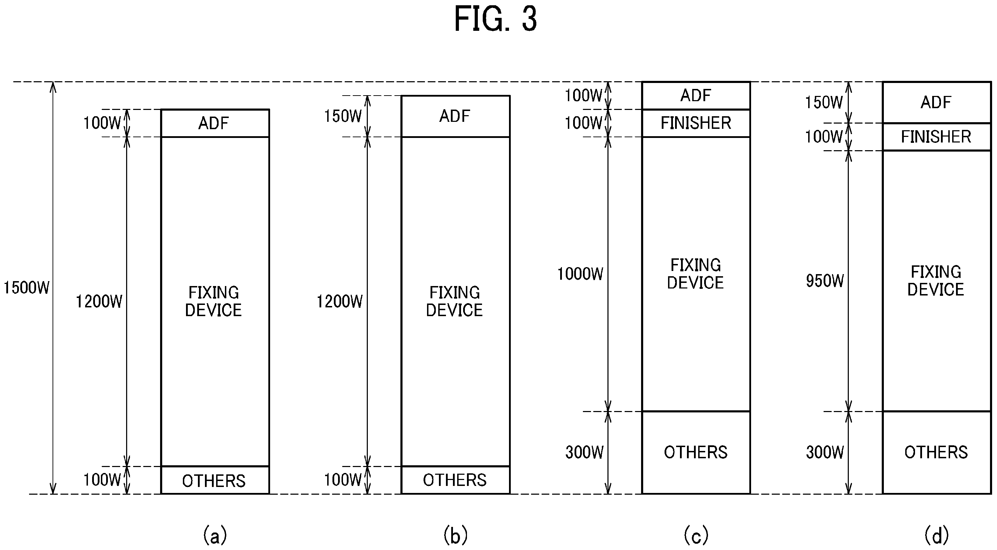

FIG. 3 is a graph illustrating examples of power distributed to devices in the image forming apparatus 100. The maximum power consumption in the image forming apparatus 100 sold in Japan is typically 1500 W.

A bar chart indicated by (a) in FIG. 3 is an example of power distributed to the devices during warming up the fixing device when the ADF reading speed is slow. In this case, the ADF reading resolution is 600 dpi, and the ADF reading speed is 300 mm/s. The controller according to the present embodiment distributes 100 W to the ADF, 1200 W to the fixing device, and 100 W to other devices such as the driver driving the fixing device and the controller. In this case, the maximum power consumption is 1400 W.

A bar chart indicated by (b) in FIG. 3 is another example of the power distributed to the devices during warming up the fixing device when the ADF reading speed is fast. In this case, the ADF reading resolution is 300 dpi, and the ADF reading speed is 600 mm/s. The controller according to the present embodiment distributes 150 W to the ADF 102, 1200 W to the fixing device, and 100 W to other devices such as the driver driving the fixing device and the controller as illustrated in (b) in FIG. 3. The maximum power consumption is 1450 W.

A bar chart indicated by (c) in FIG. 3 is an example of the power distributed to the devices during printing when the ADF reading speed is slow. In this case, the ADF reading resolution is 600 dpi, and the ADF reading speed is 300 mm/s. The controller according to the present embodiment distributes 100 W to the ADF 102, 100 W to the finisher, 1000 W to the fixing device, and 300 W to other devices such as the sheet conveyance section, the developing device, the transfer device, a fan, and the controller. The maximum power consumption is 1500 W.

The rated power of the heaters 183 is 1200 W, but in this case, the power supplied to the heaters 183 is limited to 1000 W as the upper limit power. The fixing device is designed so that printing can be performed at a prescribed printing speed and with prescribed print qualities (a fixing performance) even when the power supplied to the heaters 183 is limited to 1000 W.

A bar chart indicated by (d) in FIG. 3 is an example of the power distributed to the devices during printing when the ADF reading speed is fast. In this case, the ADF reading resolution is 300 dpi, and the ADF reading speed is 600 mm/s. As illustrated in (d) of FIG. 3, the controller according to the present embodiment distributes 150 W to the ADF 102, 100 W to the finisher, 950 W to the fixing device, and 300 W to other devices such as the sheet conveyance section, the developing device, the transfer device, the fan, and the controller. The maximum power consumption is 1500 W.

The rated power of the heaters 183 is 1200 W, but in this case, the power supplied to the heaters 183 is limited to 950 W as the upper limit power. The fixing device is designed so that printing can be performed with the prescribed print qualities (the fixing performance) even when the power supplied to the heaters 183 is limited to 950 W. However, the controller may reduce the printing speed or extend the warm-up time.

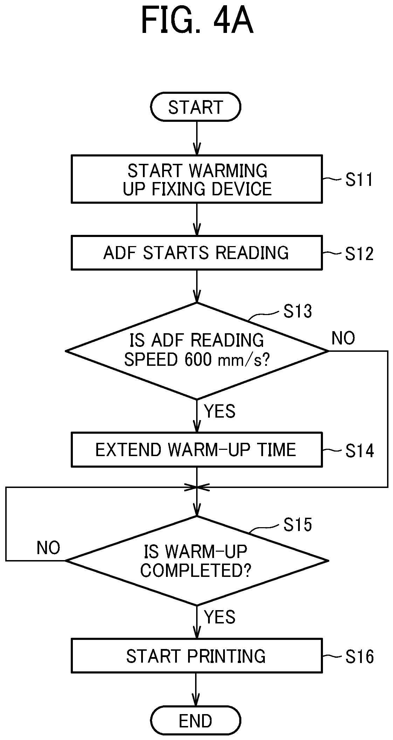

With reference to FIGS. 4A to 4D that are flowcharts, embodiments of the present disclosure are described below.

A first embodiment is described below.

FIG. 4A is a flowchart of control according to the first embodiment. In the flowchart of FIG. 4A, the controller changes the warm-up time based on the ADF reading speed. After the controller receives a recovery signal to finish an energy-saving mode, or after a power switch is turned on, the controller starts the control according to the first embodiment. In step S11, the controller starts warming up the fixing device 18.

In step S12, the controller controls the ADF 102 to start reading a document. In the case of a copy job, the controller automatically sets the ADF reading resolution.
Specifically, the controller automatically sets the ADF reading resolution to 600 dpi and sets the ADF reading speed to 300 mm/s in the copy job. This is because the high resolution (600 dpi) and the low speed (300 mm/s) can enhance the image quality of the copy, and the copy job does not need to store the scanned image data and does not need to reduce the size of the image data. In the copy job, the controller does not increase the warm-up time (No in step S13). After the warm-up is completed (Yes in step S15), the controller starts printing in step S16 and ends the control according to the first embodiment.

A printer job has two cases. In one case, the controller receives print data from a personal computer (PC) and executes only printing. In the other case, the controller receives print data from the PC, executes printing, and simultaneously executes scanning a document in parallel. A user can select the resolution to scan the document. Specifically, the user can select, for example, one of the two operation modes. In the first operation mode, the ADF reading resolution is 600 dpi, and the ADF reading speed is 300 mm/s. In the second operation mode, the ADF reading resolution is 300 dpi, and the ADF reading speed is 600 mm/s.

Power consumption is large in the second operation mode in which the ADF reading speed is 600 mm/s and the ADF reading resolution is 300 dpi. In the second operation mode, the controller is forced to distribute 950 W to the fixing device 18 during printing as illustrated in (d) of FIG. 3 because the total power is limited to 1500 W. Since the maximum power required for the fixing device 18 is 1000 W, the power is insufficient by 50 W. To countermeasure the above, the controller executes step S14 after determining that the ADF reading speed is 600 mm/s (Yes in step S13) and increases the warm-up time to compensate for the power shortage in 50 W and to accumulate heat in the fixing device 18 in step S14.

As described above, the controller predicts the power required for the fixing device 18 and the power distributed to the fixing device 18 to perform printing and determines the warm-up time based on the ADF reading speed. Scanning the document by the first operation mode in which the ADF reading resolution is 600 dpi and the ADF reading speed is 300 mm/s is frequently used but consumes low power (100 W). The above-described control can shorten the warm-up time of the printer job performed in parallel to scanning the document by the first operation mode. In addition, the above-described control can shorten the warm-up time of the copy job.

The above-described control increases the warm-up time in step S14 when the image forming apparatus performs the printer job in parallel to scanning the document by the second operation mode in which the ADF reading resolution is 300 dpi and the ADF reading speed is 600 mm/s. However, the printer job performed in parallel to scanning the document by the second operation mode in which the ADF reading resolution is 300 dpi and the ADF reading speed is 600 mm/s is rare. For this reason, increasing the warm-up time of the printer job in step S14 is rare. Since the waiting time of the user is limited, any particular problem is not caused.

A Second embodiment is described below.

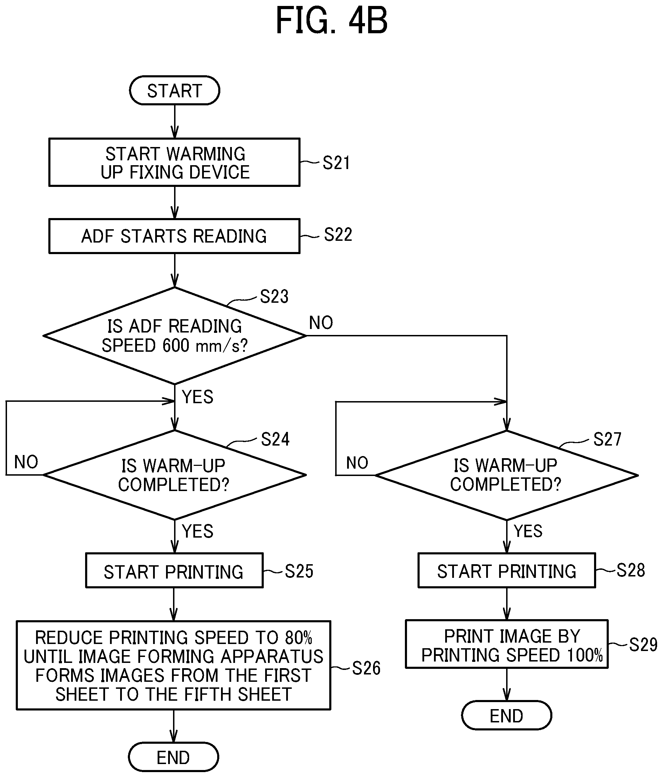

FIG. 4B is a flowchart of control according to the second embodiment. In the flowchart of FIG. 4B, the controller changes the printing speed based on the ADF reading speed while the image forming apparatus forms images from the first sheet to the fifth sheet after the start of printing. The printing speed means the number of recording media passing through the fixing device per unit time. Similar to the above-described steps S11, S12, and S13 in FIG. 4A, the controller sequentially performs steps S21, S22, and S23.

When the controller determines that the ADF reading speed is selected to be 600 mm/s (Yes in step S23), the power distributed to the fixing device 18 during printing is 950 W as indicated by (d) in FIG. 3. Since the maximum power required for the fixing device 18 is 1000 W, the power 950 W distributed to the fixing device 18 is insufficient by 50 W.

To countermeasure the above, after the controller determines that the warming-up is completed (Yes in step S24), the controller starts printing in step S25 and, in step S26, reduces the printing speed to 80% until the image forming apparatus forms images from the first sheet to the fifth sheet after the start of printing. Reducing the printing speed as described above prevents the occurrence of fixing failure (low-temperature fixing failure) due to the power shortage of the 50 W described above without extending the warm-up time.

After the image forming apparatus forms the image on the fifth sheet, the controller returns the printing speed to 100% and performs printing on the sixth sheet and subsequent sheets to shorten the waiting time of the user. Since the fixing device 18 can sufficiently accumulate heat while the image forming apparatus reduces the printing speed and forms images from the first sheet to the fifth sheet, the image forming apparatus can return the printing speed to 100% to form the images on the sixth sheet and the subsequent sheets without extending the warm-up time.

The deceleration rate of the printing speed is not limited to 80%. The number of sheets printed while the printing speed is reduced is not limited to five. The deceleration rate of the printing speed and the number of sheets printed while the printing speed is reduced are experimentally determined so as to prevent the fixing failure (low-temperature fixing failure) due to the power shortage of the 50 W described above. The printing speed or the deceleration rate can be calculated from the conveyance speed of the sheet or the rotation speed of a conveyance motor to convey the sheet. Alternatively, for example, the controller may reduce the number of sheets fed per minute and the number of documents read per minute to reduce the printing speed without changing the rotation speed of the motor. The printing speed is the number of recording media such as sheets passing through the fixing device per unit time.

As described above, the controller predicts the power required for the fixing device 18 and the power distributed to the fixing device 18 to perform printing and determines the printing speed based on the ADF reading speed. The above-described control can prevent the temperature of the fixing belt from dropping without extending the warm-up time and changing the ADF reading speed from a high speed to a low speed even when the ADF function mode in Table 1 is either "scan / copy" or "scan." As a result, the above-described control can shorten the waiting time of the user.

On the other hand, after the controller determines that the ADF reading speed is not equal to 600 mm/s (the low speed) (No in step S23) and determines that the warm-up is completed (Yes in step S27), the controller starts printing in step S28. These steps S27 and S28 are the same as the steps S15 and S16 in FIG. 4A.

The printing speed at this time is 100%. Since the ADF reading speed is low, the controller distributes 100 W to the ADF 102 and 1000 W to the fixing device 18 as illustrated in (c) of FIG. 3. As a result, the image forming apparatus can form the image with the printing speed of 100%.

A third embodiment is described below.

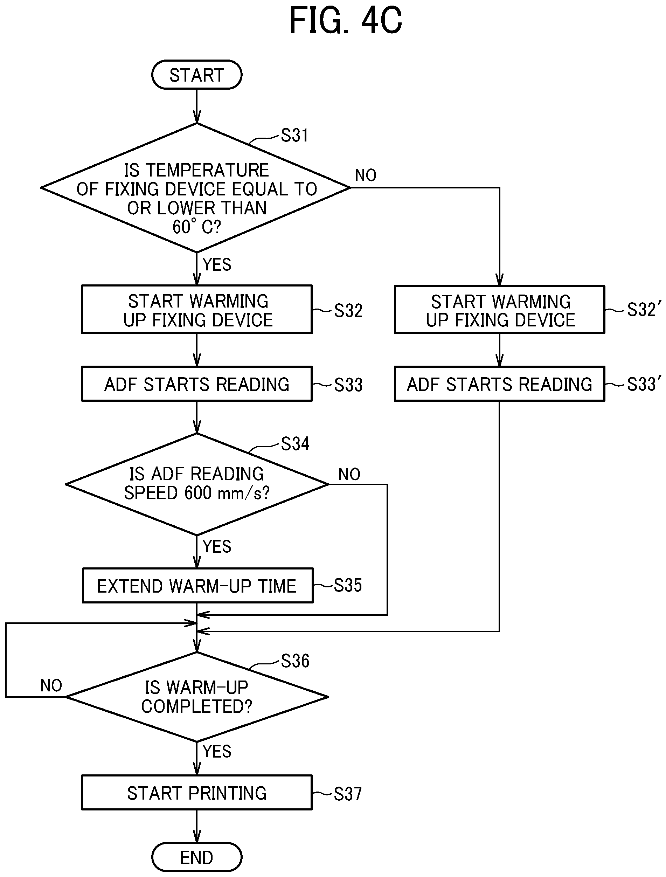

FIG. 4C is a flowchart of control according to the third embodiment. In the flowchart of FIG. 4C, the controller changes the warm-up time based on the ADF reading speed and the temperature of the fixing device before the start of warming up the fixing device. Before the start of warming up the fixing device, the controller according to the third embodiment obtains the temperature of the fixing belt detected by the thermopile 187 as the temperature T of the fixing device and determines whether the temperature T of the fixing device is equal to or lower than a predetermined temperature 60°C in step S31. When the temperature T of the fixing device is higher than the predetermined temperature 60°C., the fixing device 18 has sufficiently accumulated heat. Subsequently, without extending the warm-up time, the controller starts the warm-up of the fixing device in step S32', controls the ADF to start reading the document in step S33', starts printing in step S37 after the warm-up is completed (Yes in step S36), and completes the control according to the third embodiment. In other words, the controller sets the warm-up time common for the high ADF reading speed and the low ADF reading speed.

In the above, the maximum power required to perform printing decreases. The above-described control can prevent the temperature of the fixing belt from dropping without extending the warm-up time and changing the ADF reading speed from the high speed to the low speed even when the ADF function mode in Table 1 is either "scan / copy" or "scan." As a result, the above-described control can shorten the waiting time of the user.

On the other hand, when the controller determines that the temperature of the fixing device 18 is equal to or lower than a predetermined temperature 60°C (Yes in step S31) before starting the warm-up, the controller sequentially performs steps from step S32 to step S37 that are similar to steps from step S11 to step S16 in FIG. 4A as described above. The temperature of the step S31 is not limited to 60°C., and can be changed in accordance with the machine configuration.

A fourth embodiment is described below.

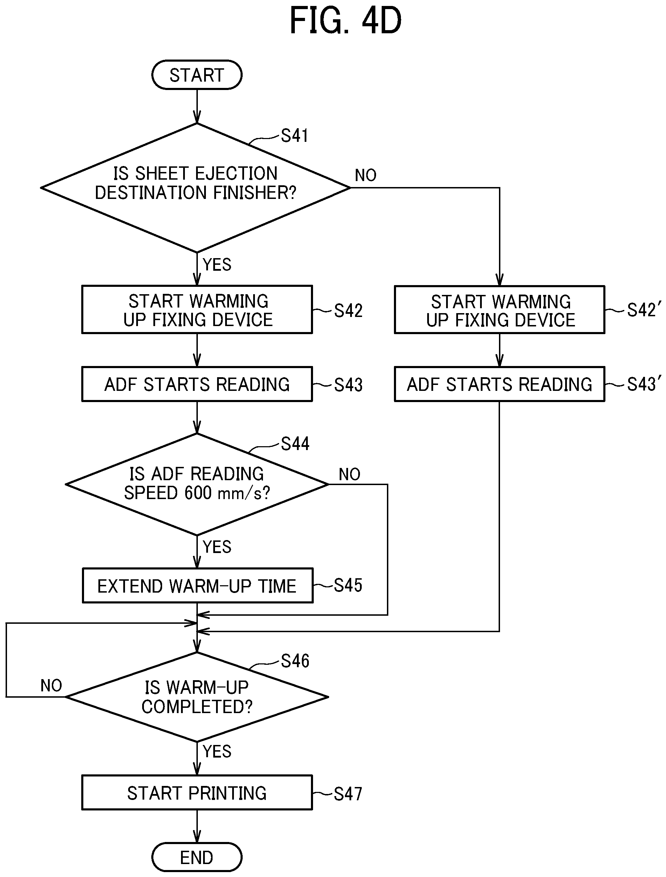

FIG. 4D is a flowchart of control according to the fourth embodiment. In the flowchart of FIG. 4D, the controller changes the warm-up time based on a sheet ejection destination of the print job. When the sheet ejection destination of the print job is the finisher, the finisher consumes 100 W. In contrast, when the sheet ejection destination is the sheet ejection tray on the main body of the image forming apparatus, the finisher does not consume 100 W.

Since not using the finisher gives a margin of 100 W, the controller does not reduce the power distributed to the fixing device 18 even when the ADF reading speed is 600 mm/s at which power consumption is large. As a result, the controller can shorten the warm-up time when the sheet ejection destination is the main body. In other words, the controller can set the warm-up time common for the high ADF reading speed and the low ADF reading speed. After the controller determines that the sheet ejection destination is not the finisher (No in step S41), the controller starts warming up the fixing device in step S42', controls the ADF to start reading the document in step S43', starts printing in step S47 after the warm-up is completed (Yes in step S46), and completes the control according to the fourth embodiment. As a result, the above-described control can shorten the waiting time of the user.

When the controller determines that the sheet ejection destination of the print job is the finisher, the finisher consumes 100 W. In addition, the ADF consumes large power when the ADF reading speed is 600 mm/s. In this case, the controller reduces the power distributed to the fixing device 18 to 950 W as illustrated in (d) of FIG. 3. As a result, the controller limits the maximum power consumption of the image forming apparatus 100 to be within 1500 W. After the controller reduces the power distributed to the fixing device 18 to 950 W, the controller starts warming up the fixing device 18 in step S42 and controls the ADF 102 to start reading the document in step S43.

Subsequently, the controller sequentially performs steps from step S42 to step S47 that are similar to steps from step S11 to step S16 in FIG. 4A and steps from step S32 to S37 in FIG. 4C as described above.

The present disclosure has been described above on the basis of the embodiments, but the present disclosure is not limited to the embodiments. Needless to say, various alterations can be made in the scope of the technical idea described in the scope of the claims. For example, the ADF reading speed may be set to three levels by adding 300 mm/s between 600 mm/s and 400 mm/s, or may be set to four or more levels by adding less than 300 mm/s, more than 600 mm/s. The controller may have multiple warm-up times of the fixing device 18 corresponding to multiple document conveyance speeds to extend the warm-up time of the fixing device 18 in accordance with each of the multiple document conveyance speeds. The controller may adjust both the warm-up time of the fixing device 18 and the printing speed based on the document conveyance speed.

The document conveyance speed in the ADF 102 includes speeds in three sections of 1) a speed while the document is conveyed from the document feed tray 110 to the scanner 103, 2) a speed while the document passes on the scanner 103 (that is the ADF reading speed), and 3) a speed while the document is conveyed from the scanner 103 to the sheet ejection tray 112, and these speeds 1), 2), and 3) may be different. In the above-described embodiments, the controller changes the warm-up time based on 2) the speed while the document passes on the scanner (that is the ADF reading speed) of the speeds described in 1), 2), and 3). However, the controller may change the warm-up time based on the speed described in 1) or the speed described in 3).

The following describes an embodiment in which the controller changes the warm-up time in accordance with 1) the speed while the document is conveyed from the document feed tray 110 to the scanner 103.

Increasing 1) the speed while the document is conveyed from the document feed tray 110 to the scanner 103 to be faster than 2) the speed while the document passes on the scanner 103 (that is the ADF reading speed) can shorten a conveyance time in which the document is conveyed from the document feed tray 110 to the sheet ejection tray 112.

For example, when 2) the speed while the document passes on the scanner 103 (that is the ADF reading speed) is 300 mm/s, 1) the speed while the document is conveyed from the document feed tray 110 to the scanner 103 is designed to be 500 mm/s. When 2) the speed while the document passes on the scanner 103 (that is the ADF reading speed) is 600 mm/s, 1) the speed while the document is conveyed from the document feed tray 110 to the scanner 103 is designed to be 800 mm/s.

In this case, 1) the speed while the document is conveyed from the document feed tray 110 to the scanner 103 is the fastest. As a result, the power consumption in the ADF also increases. Accordingly, it is preferable that the controller changes the warm-up time based on 1) the speed while the document is conveyed from the document feed tray 110 to the scanner 103. A configuration in which the controller changes the warm-up time based on 3) the speed while the document is conveyed from the scanner 103 to the sheet ejection tray 112 is similar to the above-described configuration in which the controller changes the warm-up time based on 1) the speed while the document is conveyed from the document feed tray 110 to the scanner 103.

The following describes preferred aspects of the present disclosure.

### First Aspect

In a first aspect, an image forming apparatus that includes an automatic document feeder, a fixing device, and a controller as circuitry The automatic document feeder conveys a document by one of multiple document conveyance speeds. The controller is configured to drive the automatic document feeder during warming up the fixing device and set a warm-up time of the fixing device based on the one of multiple document conveyance speeds of the automatic document feeder.

### Second Aspect

In a second aspect, an image forming apparatus includes an automatic document feeder, a fixing device, and a controller as circuitry The automatic document feeder conveys a document by one of multiple document conveyance speeds. The controller is configured to drive the automatic document feeder during warming up the fixing device and set a printing speed based on the one of multiple document conveyance speeds of the automatic document feeder.

### Third Aspect

In a third aspect, the image forming apparatus according to the first aspect further includes a temperature sensor to detect a temperature in the fixing device. The controller is further configured to obtain the temperature detected by the temperature sensor before a start of warming up the fixing device. The controller is further configured to set the warm-up time based on the one of multiple document conveyance speeds of the automatic document feeder, in response to a detection of the temperature equal to or lower than a predetermined temperature and set the warm-up time common to the multiple document conveyance speeds, in response to a detection of the temperature higher than the predetermined temperature.

### Fourth Aspect

In a fourth aspect, the image forming apparatus according to the first aspect or the second aspect further includes a body, an ejection tray on the body, and a finisher. The controller is configured to set one of the ejection tray and the finisher as an ejection destination of a recording medium to which the recording medium is ejected, set the warm-up time based on the one of multiple document conveyance speeds of the automatic document feeder, in response to the finisher set as the ejection destination, and set the warm-up time common to the multiple document speeds of the automatic document feeder, in response to the ejection tray set as the ejection destination.

### Fifth Aspect

In a fifth aspect, the automatic document feeder in the image forming apparatus according to the first aspect performs one of a first operation mode and a second operation mode. In the first operation mode, the automatic document feeder conveys a document at a first document conveyance speed and consumes first electric power. In the second operation mode, the automatic document feeder conveys a document at a second document conveyance speed faster than the first document conveyance speed and consumes second electric power larger than the first electric power. The controller sets the warm-up time corresponding to the second operation mode to be longer than the warm-up time corresponding to the first operation mode.

### Sixth Aspect

In a sixth aspect, the automatic document feeder in the image forming apparatus according to the third aspect performs one of a first operation mode and a second operation mode. In the first operation mode, the automatic document feeder conveys a document at a first document conveyance speed and consumes first electric power. In the second operation mode, the automatic document feeder conveys a document at a second document conveyance speed faster than the first document conveyance speed and consumes second electric power larger than the first electric power. The controller sets the warm-up time corresponding to the second operation mode longer than the warm-up time corresponding to the first operation mode, in response to a detection of the temperature equal to or lower than the predetermined temperature. The controller sets the warm-up time common to the first operation mode and the second operation mode, in response to a detection of the temperature higher than the predetermined temperature.

### Seventh Aspect

In a seventh aspect, the automatic document feeder in the image forming apparatus according to the fourth aspect performs one of a first operation mode and a second operation mode. In the first operation mode, the automatic document feeder conveys a document at a first document conveyance speed and consumes first electric power. In the second operation mode, the automatic document feeder conveys a document at a second document conveyance speed faster than the first document conveyance speed and consumes second electric power larger than the first electric power. The controller sets the warm-up time corresponding to the second operation mode longer than the warm-up time corresponding to the first operation mode, in response to the finisher set as the ejection destination. The controller sets the warm-up time of the fixing device that is common to the first operation mode and the second operation mode, in response to the ejection tray set as the ejection destination.

Any one of the above-described operations may be performed in various other ways, for example, in an order different from the one described above.

## Claims

1. An image forming apparatus (100) comprising:
an automatic document feeder (102) to convey a document by one of multiple document conveyance speeds;
a fixing device (18); and
a controller (105) configured to:
drive the automatic document feeder (102) during warming up the fixing device (18); and
set at least one of:
a warm-up time of the fixing device (18); or
a printing speed,
based on the one of multiple document conveyance speeds of the automatic document feeder (102).

2. The image forming apparatus (100) according to claim 1, further comprising:
a temperature sensor (187) to detect a temperature in the fixing device (18),
wherein the controller (105) is further configured to:
obtain the temperature detected by the temperature sensor (187) before a start of warming up the fixing device (18);
set the warm-up time based on the one of multiple document conveyance speeds of the automatic document feeder (102), in response to a detection of the temperature equal to or lower than a predetermined temperature; and
set the warm-up time common to the multiple document conveyance speeds, in response to a detection of the temperature higher than the predetermined temperature.

3. The image forming apparatus (100) according to claim 1 or 2, further comprising:
a body (101);
an ejection tray (112) on the body (101); and
a finisher (104),
wherein the controller (105) is further configured to:
set one of the ejection tray (112) and the finisher (104) as an ejection destination of a recording medium to which the recording medium is ejected,
set the warm-up time based on the one of multiple document conveyance speeds of the automatic document feeder (102), in response to the finisher (104) set as the ejection destination, and
set the warm-up time common to the multiple document conveyance speeds of the automatic document feeder (102), in response to the ejection tray set as the ejection destination.

4. The image forming apparatus (100) according to claim 1,
wherein the automatic document feeder (102) performs one of:
a first operation mode to:
convey a document at a first document conveyance speed; and
consume first electric power; and
a second operation mode to:
convey a document at a second document conveyance speed faster than the first document conveyance speed; and
consume second electric power larger than the first electric power, and
the controller (105) sets the warm-up time corresponding to the second operation mode to be longer than the warm-up time corresponding to the first operation mode.

5. The image forming apparatus (100) according to claim 2,
wherein the automatic document feeder (102) performs one of:
a first operation mode to convey a document at a first document conveyance speed and consume first electric power; and
a second operation mode to convey a document at a second document conveyance speed faster than the first document conveyance speed and consume second electric power larger than the first electric power, and
the controller (105) sets:
the warm-up time corresponding to the second operation mode longer than the warm-up time corresponding to the first operation mode, in response to a detection of the temperature equal to or lower than the predetermined temperature; and
the warm-up time common to the first operation mode and the second operation mode, in response to a detection of the temperature higher than the predetermined temperature.

6. The image forming apparatus (100) according to claim 3,
wherein the automatic document feeder (102) performs one of:
a first operation mode to:
convey a document at a first document conveyance speed: and
consume first electric power; and
a second operation mode to:
convey a document at a second document conveyance speed faster than the first document conveyance speed; and
consume second electric power larger than the first electric power, and
the controller (105) sets:
the warm-up time corresponding to the second operation mode longer than the warm-up time corresponding to the first operation mode, in response to the finisher (104) set as the ejection destination, and
the warm-up time of the fixing device (18) that is common to the first operation mode and the second operation mode, in response to the ejection tray set as the ejection destination.
